# EUROPEAN PATENT APPLICATION

(11) **EP 1 711 016 A2**
(43) Date of publication of application: **11.10.2006**
(21) Application number: 06251965.7
(22) Date of filing: 07.04.2006
(51) Int. Cl.: H04N 7/26

(54) **Coding data**

(30) Priority: 07.04.2005 GB 0507105
(71) Applicant: British Broadcasting Corporation, London W1A 1AA (GB)
(72) Inventor: Russell, Richard Thomas, Orsett Essex RM16 3DF (GB)
(74) Representative: Kazi, Ilya

(57) **Abstract**

A method and system for encoding data to allow coded data to be passed through legacy equipment having a predetermined format different from the format of the encoded data. Included with the compressed data signal are a small number of bits providing a degraded representation of the signal, so that if it is attempted to play or read the compressed output signal in the legacy format, a degraded representation of the signal is provided. Such a degraded representation is useful for confidence monitoring and identification purposes.

## Description

This invention relates to coding of data signals. This invention is particularly, but not exclusively applicable to coding video signals usable in legacy equipment

Much existing signal processing equipment, for example in studios or transmission stations is designed to carry video and/or audio signals of a predetermined format. With constant demands on bandwidth, and ever changing volumes and types of data to be conveyed and processed, new formats, and in particular compressed signal formats are becoming increasingly used. It has been proposed pursuant to the invention that it may be possible to convey or store a media signal in one format using existing cabling and other circuitry originally or designed to carry media signals in a different, typically older format. Such existing cabling or equipment is often referred to as 'legacy' equipment. For example, it may be desirable to carry a compression encoded video signal through a video pathway intended to operate on a serial uncompressed video signal.

However, this can give rise to problems. Using the example of a compression encoded video signal, if the compressed video signal is connected, either deliberately or inadvertently, to a display device or other equipment which expects to receive an uncompressed signal. This will typically result in either a failure to accept the signal as valid, or the display of an image containing no recognisable picture information. Many compression schemes aim to maximise entropy (or conversely reduce redundancy) and therefore if such a compression system is working effectively, the compressed video will resemble random noise.

The invention provides, in a first aspect, a method of storing or transmitting a signal in a data storage medium or transmission channel having a legacy data format having a legacy data capacity, said method comprising encoding a first relatively high quality representation of the signal into a first compressed data stream, having a compressed data requirement less than said legacy data capacity; storing said compressed data stream in an output data stream according to said legacy data format leaving residual data bits corresponding to the difference between the legacy data capacity and the compressed data requirement; and providing a second relatively low quality representation of the signal as data in said residual data bits such that the output data stream provides a degraded representation of the signal when read as a data stream having the legacy format.

By including with the compressed signal, a portion of uncompressed data in this way, the picture contents are recognisable, albeit at degraded quality, if the compressed signal is displayed as if it were a conventional uncompressed signal. This provides a useful indication if the compressed signal is inadvertently connected to an uncompressed display, and permits the deliberate use of readily available uncompressed display devices for confidence monitoring and identification purposes.

By way of background, it has previously been proposed to provide a representation of a signal and a corresponding enhancement signal in a 'layered coding' arrangement. Examples include US 2004/0258242, US 2003/0108341 and US 5253058 which discloses a coding scheme which produces a basic layer and a contribution layer which, when combined with the basic layer, enables a higher quality video signal to be reconstructed. The contribution layer however is not a true representation of the signal but instead represents signal differences, and is meaningless taken in isolation.

The legacy format is typically an uncompressed format, preferably serial digital, but may be for example an earlier generation compressed format.

Preferably the compressed data stream is stored in a less significant portion, typically the least significant bits of the output data stream. In this way a low quality representation can be put in a more significant portion, typically the most significant bits of the output, such that when it is read in the legacy format, the coded data effectively appears as noise superimposed onto a low resolution version of the original signal and although typically the coded data stream occupies the major portion of the data, the low quality representation is still recognisable. Where stuffing bits are included in the coded bits, it is preferable that these be random or quasi random to minimise their visibility. In a basic embodiment the output stream will have a fixed word structure having a specified number of MSBs reserved for uncoded data, however the word structure may vary over a block of data. For example, it may be advantageous periodically to output a word containing only coded data. While this will tend to further degrade portions of the output signal when read as an uncompressed data stream, the signal may still be sufficiently recognizable.

Increasing the quality of the degraded representation of the signal will tend to increase the bit overhead of the associated data. It is envisaged that in most media applications the degraded representation will be observed (viewed, heard) by a user, and therefore in a preferred embodiment the original signal should be recognizable to a user, or put another way, allow the original signal to be distinguished from other signals, either at a similar degraded resolution or at standard resolution. It is advantageous that the uncompressed data occupies no more bits of the output than is necessary to provide a recognisable output. Preferably the compressed data stream occupies a greater proportion of the output data stream than the uncompressed data. More preferably, the uncompressed data occupies less than a quarter of the output data stream. Relative proportions of the output data stream may refer to instantaneous bit rates, or averaged bit rates, and the number of bits used may be dependent upon the word rate or average data rate.

In a preferred embodiment, a 2 bit (or less) quantised version is used for providing the second relatively low quality representation of the signal. As noted above, further overhead reduction is possible since not every pixel element or audio sample need be provided with a second low quality representation for the degraded output to be recognizable to a user. In a video application, while approximately 2 bits may be appropriate, an embodiment may use less than an average of 2 bits per pixel for chrominance values for providing the second relatively low quality representation of the signal, and may even substantially omit chrominance information.

Preferably said second low quality representation of the signal is provided by quantizing into the number of residual data bits of said output data stream.
This may result in a very coarsely quantized signal, which can result in a 'posterised' or 'contoured' effect, i.e. the separation of the picture into clearly delineated regions with different colours and/or brightness. In an audio application, the sound quality will be noticeably degraded.

The effect of coarse quantisation can be reduced by adding a suitable dither signal to the uncompressed signal before quantizing.

In a second aspect, the invention provides apparatus for storing or transmitting a signal in a data storage medium or transmission channel having a legacy data format having a legacy data capacity, comprising an encoder for encoding a first relatively high quality representation of the signal into a compressed data stream, having a compressed data requirement less than said legacy data capacity; a memory for storing said compressed data stream in an output data stream according to said legacy data format leaving residual data bits corresponding to the difference between the legacy data capacity and the compressed data requirement; and a data reducer for providing a second relatively low quality representation of the signal as uncompressed data in said residual data bits; such that the output data stream provides a degraded representation of the signal when read as an uncompressed data stream in the legacy format.

A third aspect of the invention provides a method of signal processing comprising passing a compressed signal through signal processing apparatus adapted to operate on uncompressed signals, characterised in that a first portion of said compressed signal contains compressed signal data and a second portion of said compressed signal contains data representing an uncompressed version of said compressed signal, such that the signal content is recognisable when output as an uncompressed signal.

A fourth, related aspect of the invention provides a method for extracting a signal from a data stream produced by any one of the above methods, said method comprising parsing the data to extract said compressed data; and decoding said compressed data to produce a representation of said signal.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

Any feature in one aspect of the invention may be applied to other aspects of the invention, in any appropriate combination. In particular, method aspects may be applied to apparatus aspects, and vice versa.

Embodiments of the invention will now be described with reference to the accompanying drawings in which:
Figure 1 shows a 10 bit data structure according to one aspect of the present invention;
Figure 2 a two-dimensional halftone pattern;
Figure 3 shows a data block structure according to an embodiment of the present invention;
Figure 4 illustrates a method of data processing according to an aspect of the present invention;

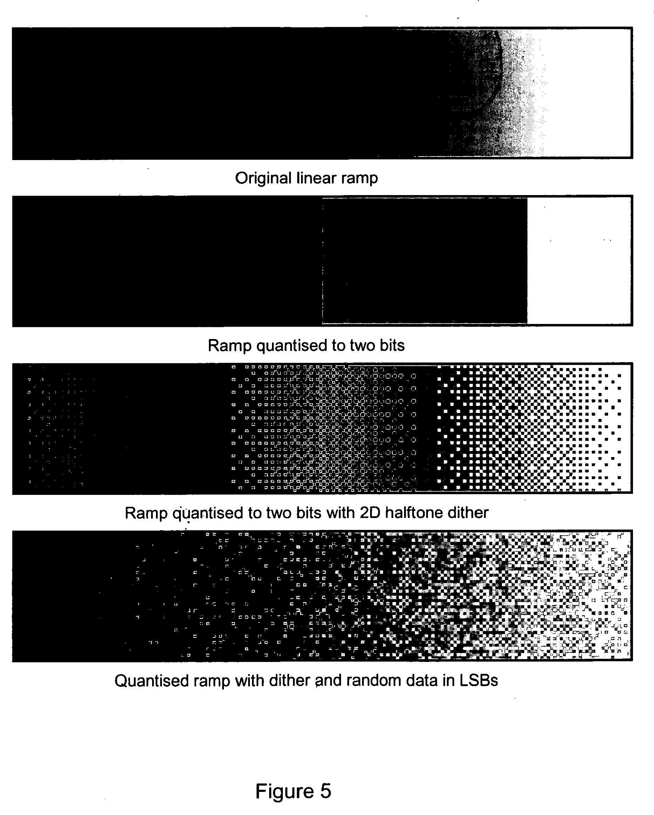

Figure 5 illustrates the results of the dithering.

Professional uncompressed video signals, of the kind used within the infrastructure of a broadcast centre, typically consist of an array of 10-bit words containing luminance or chrominance information for each TV pixel. Such systems are typified by the 'SDI' (Serial Digital Interface) and 'HDSDI' (High Definition Serial Digital Interface) standards.

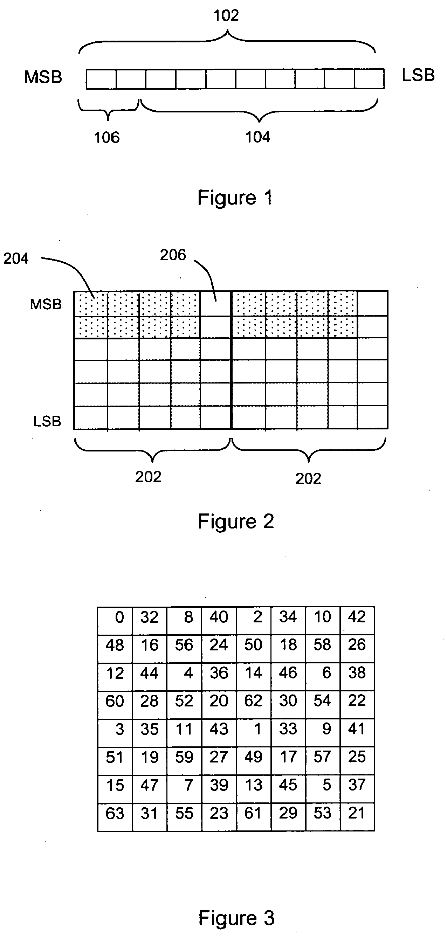

Referring to Figure 1, the least-significant 8-bits 104 of each 10-bit word 102 are used to contain the compressed video data, and the most-significant 2-bits 106 of each 10-bit word are used to contain a coarsely-quantised version of the original picture converted to a form compatible with the uncompressed signal. For example the compressed data might contain a progressive scan representation of the original programme and the most-significant 2-bits a coarsely-quantised interlaced scan version of the same material.

Figure 2 shows an alternative data arrangement for the output signal. Here data are arranged in blocks 202 having a predetermined structure. Each block contains a number of data words in which the 2 MSBs are uncompressed data 204 (shown shaded) representing the coarsely quantised version of the original picture as before. One word, 206, in each block however contains only compressed data, thus increasing the overall proportion of compressed data in the output stream. This may result in portions of the degraded version of.the original picture having no low quality representation (for example a plurality of noisy vertical lines), while still enabling the picture to be recognizable to a viewer.

In a simple embodiment the most-significant 2-bits of the video would correspond directly to the most-significant 2-bits of the compatible uncompressed signal.

Possible contouring can be reduced by adding a suitable dither signal to the uncompressed video before extracting the most-significant 2-bits. For example when reducing an 8-bit video signal (with pixel values in the range 0 to 255) to 2 bits an appropriate dither signal is a two-dimensional halftone pattern containing the values 0 to 63, as shown in Figure 3.

This 8x8 pattern is repeated both horizontally and vertically to fill the extent of the picture, and the dither is added independently to the luminance, Cb chrominance and Cr chrominance components. This can be achieved by determining the dither value using the line number evaluated modulo-8, and the column selected is determined by the pixel number (0-1919 for luminance, 0-959 for chrominance) evaluated modulo-8.

A further enhancement is to subtract the compressed data value for that pixel from (four times) the sum of the compatible video and the dither, before extracting the most-significant 2-bits. This acts to prevent any deviation from true randomness in the compressed data resulting in a net bias to the compatible video. By using such techniques it has been found that surprisingly, without increasing the bit overhead, the degraded video signal can be made to have a perceived quality which would usually be associated with many more bits of resolution.

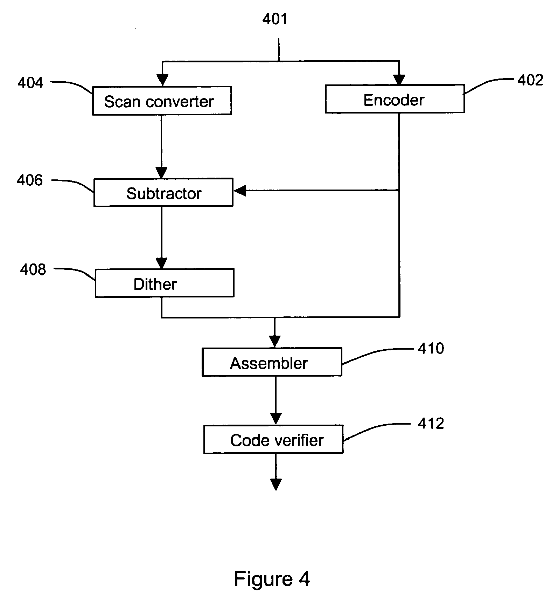

Figure 4 illustrates a process to produce a data stream according to an aspect of the invention.

A progressive scan input signal is encoded according to a suitable compression scheme at encoder 402 to produce a sequence of 8 bit coded data packets. At scan converter 404, a10 bit interlaced version of the input is created, typically by averaging pairs of consecutive progressive lines. The phase of the line pairing is different on even fields and odd fields in order to achieve the required interlaced structure.

Each 10-bit pixel value the 8-bit value of the coded data packet corresponding to that pixel's position is subtracted from each 10-bit pixel value at subtractor 406. A two-dimensional halftone dither is then added at ditherer 408, and the result limited to a valid range.

At assembler 410 the least-significant 8-bits of the resulting pixel values are discarded and the 8-bit values from the coded data packet inserted in their place. Finally, at code verifier 412, if the final 10-bit value is a forbidden TRS code (reference is directed to ITU-R BT.1120-4 (2003) Digital interfaces for HDTV studio signals, sections 2.1 and 2.3.) the most-significant two bits are modified.

For example:
00 000000 xx is modified to 01 000000 xx
11 111111 yy is modified to 10 111111 yy

So it can be seen that, for a given pixel (x,y), if **C(x,y)** is the 8-bit compressed data value is and **V(x,y)** is the 8-bit compatible video signal (each in the range 0-255) then the final 10-bit composite signal **S(x,y)** can be derived as follows:
**S(x,y) = (clip(4*V(x,y) + 4*D(x mod 8,y mod 8) - C(x,y)) & Ox300) + C(x,y)**
where **D(x,y)** is the dither value, **mod** indicates the modulo operator and clip represents a function which limits the value to the range 0 to +1023.

While the invention has been described in relation to video signals, it can equally be applied to audio signals. For example a multi channel audio representation could be encoded using MPEG-2 and stored as a data stream including a number of bits of PCM audio of the main sound channel, so that when the data stream is played out directly (without decoding), a low quality version of the main sound channel is reproduced.

The particular encoding algorithm used to encode the data is not material to the present invention, and a wide range of possible alternatives can be used including MPEG type encoding. A particularly suitable algorithm, for producing a compressed output is described in our concurrently filed copending application bearing reference number P27498GB/IK.

## Claims

1. A method of storing or transmitting a signal in a data storage medium or transmission channel having a legacy data format having a legacy data capacity, said method comprising:
encoding a first relatively high quality representation of the signal into a compressed data stream, having a compressed data requirement less than said legacy data capacity;
storing said compressed data stream in an output data stream according to said legacy data format leaving residual data bits corresponding to the difference between the legacy data capacity and the compressed data requirement;
providing a second relatively low quality representation of the signal as data in said residual data bits;
such that the output data stream provides a degraded representation of the signal when read as a data stream having the legacy format.

2. A method according to Claim 1, wherein said compressed data stream is stored in less significant bits of said output data stream and wherein uncompressed data is stored in more significant bits of said output data stream.

3. A method according to Claim 1 or Claim 2, wherein said compressed data stream occupies a greater proportion of the output data stream than the low quality representation data.

4. A method according to any preceding claim, wherein said degraded representation is recognizable to a user.

5. A method according to any preceding claim, wherein said output stream has a fixed word structure.

6. A method according to any one of Claims 1 to 4, wherein said output stream has a fixed block structure.

7. A method according to any preceding claim wherein said data representing said second relatively low quality representation of the signal is uncompressed.

8. A method according to any preceding claim, wherein said second low quality representation is provided by quantizing the signal into the number of residual data bits of said output data stream.

9. A method according to Claim 8, wherein a dither is added to the signal prior to quantizing to provide said second low quality representation.

10. A method according to Claim 9, wherein the dither pattern added is determined according to the number of residual data bits.

11. A method according to any one of Claims 8 to 10, wherein a portion of said compressed data stream is subtracted from the corresponding portion of said signal prior to quantizing to provide said second low quality representation.

12. A method according to any preceding claim, wherein providing a second relatively low quality representation of the signal as data comprises converting said signal to a lower resolution format.

13. A method according to any preceding claim, wherein said signal is a video signal and wherein said uncompressed data comprises an average of less than or equal to 2 bits per pixel chrominance value.

14. A method according to any preceding claim, wherein said signal is a video signal and wherein said uncompressed data comprises an average of less than or equal to 4 bits per pixel.

15. A method according to any preceding claim, wherein the legacy data capacity is 10 bit.

16. A method according to any preceding claim, wherein the compressed data requirement is 8 bit.

17. A method according to any preceding claim, wherein the compressed data stream represents a progressive scan video signal.

18. A method according to any preceding claim, wherein the uncompressed data is an interlaced video signal.

19. A method according to any preceding claim, further comprising checking the output stream for non-allowed codes and substituting any such non-allowed codes.

20. Apparatus for storing or transmitting a signal in a data storage medium or transmission channel having a legacy data format having a legacy data capacity, comprising:
an encoder for encoding a first relatively high quality representation of the signal into a compressed data stream, having a compressed data requirement less than said legacy data capacity;
a memory for storing said compressed data stream in an output data stream according to said legacy data format leaving residual data bits corresponding to the difference between the legacy data capacity and the compressed data requirement;
a data reducer for providing a second relatively low quality representation of the signal as uncompressed data in said residual data bits;
such that the output data stream provides a degraded representation of the signal when read as an uncompressed data stream in the legacy format.

21. A method for extracting a signal from a data stream produced by any one of Claims 1 to 19, said method comprising:
parsing the data to extract said compressed data; and
decoding said compressed data to produce a representation of said signal.

22. A method of signal processing comprising passing a compressed signal through signal processing apparatus adapted to operate on uncompressed signals, **characterised in that** a first portion of said compressed signal contains compressed signal data and a second portion of said compressed signal contains data representing an uncompressed version of said compressed signal, such that the signal content is recognisable when output as an uncompressed signal.

23. A method according to Claim 22, wherein said first portion is a less significant portion and said second portion is a more significant portion.

24. A method according to Claim 22 or Claim 23, wherein said first portion of said compressed signal is greater than said second portion of said compressed signal.
